# NEUE EUROPÄISCHE PATENTSCHRIFT

(11) **EP 0 226 774 B2**
(45) Veröffentlichungstag und Bekanntmachung des Hinweises auf die Entscheidung über den Einspruch: **01.09.1993**
(45) Hinweis auf die Patenterteilung: 18.07.1990
(21) Anmeldenummer: 86115380.7
(22) Anmeldetag: 06.11.1986
(51) Int. Cl.: F16K 17/10, F16K 31/42

(54) **Vorgesteuertes Druckbegrenzungsventil**
Pilot operated pressure control valve
Limiteur de pression servocommandé

(30) Priorität: 14.12.1985 DE 3544389
(43) Veröffentlichungstag der Anmeldung: 01.07.1987
(73) Patentinhaber: ROBERT BOSCH GMBH, 70442 Stuttgart (DE)
(72) Erfinder: Sandau, Hartmut, Dipl.-Ing., D-7141 Möglingen (DE)

(56) Entgegenhaltungen:
- EP-A- 0 006 770
- EP-A- 0 117 208
- US-A- 2 988 675
- US-A- 3 240 390
- US-A- 3 484 076
- Der Hydrauliktrainer; Bd. 2; B20, B21; RD 00 303/01.86
- Proportional-Druckventile, Baugruppe H300 Schrift 2183, DR-00283 D 4.77 JF

## Beschreibung

Die Erfindung geht aus von einem vorgesteuerten Druckbegrenzungsventil nach der Gattung des Hauptanspruchs.

Bei einem bekannten Druckbegrenzungsventil ist das Vorsteuerventil als Elektromagnetventil ausgebildet, dessen Magnet sowohl ziehend als auch drückend gestaltet sein kann, so daß der maximale Druck bei stromlosem bzm. im stromdurchflossenen Zustand des Elektromagneten wirksam ist. Damit das Druckbegrenzungsventil stabil arbeitet, muß das Vorsteuerventil eine hohe Eigenfrequenz aufweisen. Dazu ist eine steife Feder und eine kleine Masse des Ventilkörpers notwendig. Dies setzt bei einer steifen Feder ein festes Widerlager voraus, um einen großen Stabilitätsumfang zu erhalten.

In der Broschüre der Firma Herion, Baugruppe H 300, Schrift 00283 vom 4.77 ist auf Seite 17 ein gattungsgemäßes Proportional-Druckbegrenzungsventil dargestellt, das in der zum Tankführenden Bohrung Y eine Drossel 7 aufweist. Der vor der Drossel herrschende Druck wirkt in den Raum hinter dem Ventilsitz 3. Aufgrund des Spiels des Ventilkörpers kann möglicherweise auch Druckmittel auf die dem Ventilsitz abgewandte Seite des Ventilkörpers gelangen.

Aus der EP-A 117 208 ist ein vorgesteuertes Druckbegrenzungsventil bekannt, bei dem der Druck des von der Pumpe geförderten Druckmittels einem auf dem Ventilsitz des Vorsteuerventils einwirkenden Kolbens zugeführt wird. Abhängig von der Stellung eines Steuerschiebers und der Größe der Einlaßbohrungen wird die Größe des wirksamen Drucks gesteuert. Bei geöffnetem Ventilsitz des Druckbegrenzungsventils fließt dessen Steuerölstrom direkt in den Tank ab, ohne daß ein zusätzlicher auf den Ventilkörper des Vorsteuerventils einwirkender Druck erzeugt wird.

Das erfindungsgemäße Druckbegrenzungsventil mit den kennzeichnenden Merkmalen des Hauptanspruchs hat demgegenüber den Vorteil, daß das vorgesteuerte Druckbegrenzungsventil klein baut, wobei insbesondere keine große und steife Druck federfürdas Vorsteuerventil notwendig ist. Ferner kann bei einem Vorsteuerventil mit einstellbarer Federkraft das Widerlager der Feder gleichzeitig als Druckfläche verwendet werden. Es ist kein festes Widerlager für die Feder notwendig.

Durch die in den Unteransprüchen aufgeführten Maßnahmen sind vorteilhafte Weiterbildungen und Verbesserungen des im Hauptanspruch angegebenen vorgesteuerten Druckbegrenzungsventils möglich.

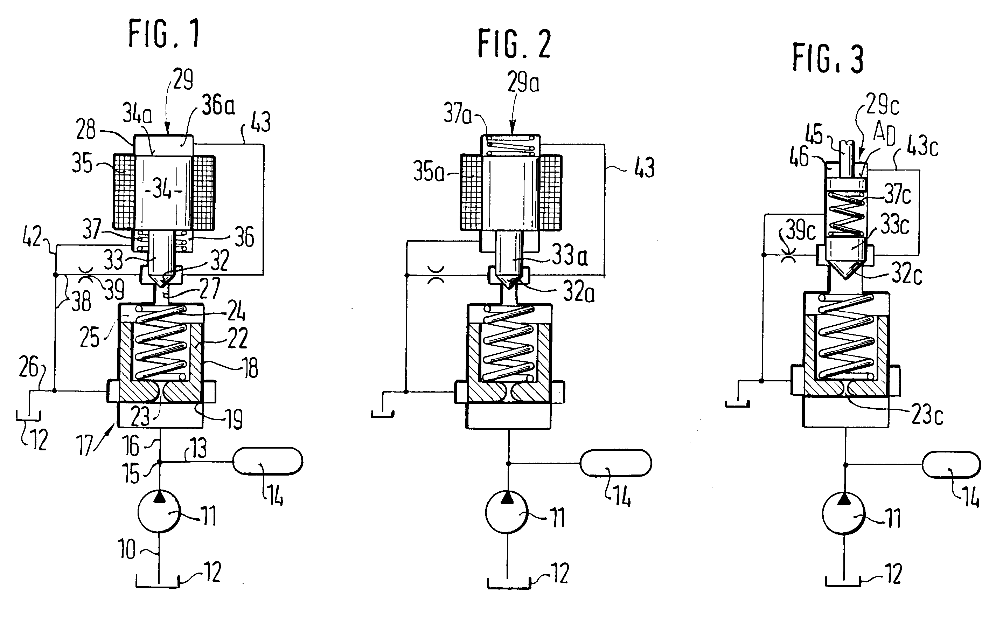

Ein Ausführungsbeispiel der Erfindung ist in der Zeichnung dargestellt und in der nachfolgenden Beschreibung näher erläutert. Es zeigen Figur 1 einen Längsschnitt durch ein vorgesteuertes Druckbegrenzungsventil in vereinfachter Darstellung und die Figuren 2 und 3 je eine Abwandlung des Ausführungsbeispiels nach Figur 1.

### Beschreibung des Ausführungsbeispiels

Über eine Zulaufleitung 10 saugt eine Pumpe 11 Druckmittel aus einem Tank 12 an und fördert es in eine Pumpenleitung 13, die zu einem nicht näherdargestellten Verbraucher 14 führt. Von einer Stelle 15 zweigt von der Pumpenleitung 13 eine Leitung 16 zu einem vorsteuerbaren Druckbegrenzungsventil 17 ab. Dessen Gehäuse 18 weist einen Ventilsitz 19 auf, dem ein etwa becherförmiger Schließkörper 22 zugeordnet ist. In dessen Boden ist mittig eine Blende 23 ausgebildet. In dem den Schließkörper 22 aufnehmenden Raum 25 ist eine Feder 24 angeordnet, der zugleich als Druckraum für das Druckbegrenzungsventil 17 dient.

Vom Druckbegrenzungsventil 17 zweigt kurz hinter dem Ventilsitz 19 eine Leitung 26 zum Tank 12 ab. Ein Kanal 27 führt vom Raum 25 des Druckbegrenzungsventils 17 zum Gehäuse 28 eines elektromagnetischen Vorsteuerventils 29. Sein Gehäuse 28 weist einen Ventilsitz 32 auf, dem ein kegelförmiger Ventilkörper 33 zugeordnet ist. Der Ventilkörper 33 ist fest mit dem Anker 34 des Vorsteuerventils 29 verbunden. Ferner befindet sich im Bereich des Ankers 34 die Spule 35 des Vorsteuerventils 29. Im Ankerraum 36 des Vorsteuerventils 29 ist vom Ventilkörper 33 geführt eine Druckfeder 37 angeordnet, die den Ventilkörper 33 vom Ventilsitz 32 abhebt. Kurz hinter dem Ventilsitz 32 zweigt eine Leitung 38, in der sich eine Drossel 39 befindet, zur Rücklaufleitung 26 und somit zum Tank 12 ab. In die Leitung 38 mündet stromabwärts nach der Drossel 39 eine Leckölleitung 42, die im Bereich der Druckfeder 37 vom Gehäuse 28 des Vorsteuerventils 29 abzweigt. Fernerführtvon einer Stelle unmittelbar hinter dem Ventilsitz 32 eine Leitung 43 in den sich hinter dem Anker 34 befindenden Teil 36a des Ankerraums 36. Der Teil 36a des Ankerraums 36 dient zugleich als Druckraum, so daß die dem Ventilsitz 32 abgewandte Stirnseite 34a des Ankers 34 mit Druck beaufschlagt ist.

Das von der Pumpe 11 in die Pumpenleitung 13 geförderte Druckmittel strömt zum Verbraucher 14 und gelangt durch die Blende 23 des Schließkörpers 22 des Druckbegrenzungsventils 17 auch in den Raum 25. Überschreitet der Druck in der Pumpenleitung 13 den durch das Vorsteuerventil 29 eingestellten Wert, so hebt der Ventilkörper 33 von seinem Ventilsitz 32 ab. Der Öffnungsdruck des Vorsteuerventils 29 setzt sich aus der Kraft der Druckfeder 37 und der durch die stromdurchflossenen Spulen 35 erzeugten Magnetkraft zusammen. Jetzt kann auch der Schließkörper 22 des Druckbegrenzungsventils 17 mit Hilfe der Blende 23 einen Steuerölstrom Q erzeugen.

Die Größe des Steuerölstroms Q ist durch die Größe der Blende 23 und durch die Kraft der Feder 24 bestimmt. Der Steuerölstrom Q kann vom Federraum 25 über den Kanal 27 und den geöffneten Ventilsitz 32 in die Leitung 38 und somit über die Rücklaufleitung 26 in den Tank 12 zurückströmen. Der an der Drossel 39 abfallende Druck wirkt über die Leitung 43 in den Teil 36a des Ankerraums 36 und dort auf die Stirnfläche 34a des Ankers 34. Dadurch erhält man eine sogenannte Gegenkopplung, was bedeutet, daß der Ventilkörper 33 wieder auf den Ventilsitz 32 gedrückt wird. Je weiter der Ventilkörper 33 geöffnet ist, desto mehr Steueröl kann durchströmen und umso größer ist der Druckabfall an der Drossel 39. Folglich ist auch die Kraft größer, die auf die Stirnseite 34a wirkt und den Ventilkörper 33 wieder auf seinen Ventilsitz 32 drückt. Überschreitet der Druck in der Pumpenleitung 13 den am Druckbegrenzungsventil 17 eingestellten Öffnungsdruck, so wird der Schließkörper 22 des Druckbegrenzungsventils 17 vom Ventilsitz 19 abgehoben. Überschüssiges Druckmittel strömt über die Rücklaufleitung 26 in den Tank 12 ab.

Durch entsprechende Wahl der Drossel 39, der Größe des Steuerölstroms und der wirksamen Ankerfläche 34a kann eine hohe Steifigkeit des Vorsteuerventils 29 erreicht werden, die selbst bei einer großen Masse des mit dem Anker 34 verbundenen Ventilkörpers 33 für eine hohe Eigenfrequenz des Vorsteuerventils 29 sorgt. Dabei braucht die Steifigkeit der Druckfeder 37 bei der Eigenfrequenz des Vorsteuerventils 29 nicht berücksichtigt zu werden.

In Figur 2 ist eine Abwandlung des Ausführungsbeispiels nach Figur 1 dargestellt. Während in Figur 1 das Vorsteuerventil 29 mit einem sogenannten drückenden Elektromagneten dargestellt ist, ist in Figur 2 das Vorsteuerventil 29a mit einem ziehenden Eletromagneten ausgebildet. Somit drückt in der Ausführung nach Figur 2 die Druckfeder 37a den Ventilkörper 33a bei nicht stromdurchflossener Spule 35a auf den Ventilsitz 32a, während er in Figur 1 von der Druckfeder 37 vom Ventilsitz 32 abgehoben wird. Die Wirkungsweise des Druckbegrenzungsventils 17 und des Vorsteuerventils 29a wird dadurch nicht beeinflußt.

In Figur 3 ist ein weiteres Ausführungsbeispiel dargestellt. Bei diesem ist ein nicht dargestellter Elektromagnet zur Vorsteuerung verwendet. Im Gehäuse 28c des Vorsteuerventils 29c ist eine Druckfeder 37c angeordnet, die mit ihrem einen Ende am Ventilkörper 33c anliegt und sich mit ihrem anderen Ende an einem Verstellkolben 45 anlegt, der mit dem Elektromagneten verbunden ist. Der Verstellkolben 45 dient zum Einstellen der Kraft der Druckfeder 37c. Ferner weist der Verstellkolben 45 an der der Feder 37c abgewandten Seite eine Druckfläche A_{D} auf. In dessen Kolbenraum 46, der zugleich als Druckraum dient, mündet die Leitung 43c, die kurz hinter dem Ventilsitz 32c des Vorsteuerventils 29c abzweigt.

Die Wirkungsweise des Vorsteuerventils 29c entspricht wieder der beim Ausführungsbeispiel nach Figur 1 beschriebenen. Ohne Verwendung von Gewinden oder festen Widerlagern zur Veränderung der Kraft der Druckfeder 37c, kann mit einer nicht fest vorgegebenen Kraft der Druckfeder 37c gearbeitet werden. Durch entsprechende Dimensionierung der Drossel 39c und der Blende 23c, des Steuerölstroms Q und der Druckfläche A_{D} kann erreicht werden, daß der Verstellkolben 45 in seiner Position unveränderlich bleibt und durch Druckänderungen nicht beeinflußt werden kann. Mit Hilfe z.B. eines Proportionalmagnetes, mit dem der Verstellkolben 45 in Wirkverbindung steht, kann der Verstellkolben 45 und somit die Kraft der Druckfeder 37, eingestellt werden. Somit ist es in einfacher Weise möglich, ein fernverstellbares Druckventil mit einem großen Stabilitätsbereich herzustellen.

## Patentansprüche

1. Vorgesteuertes Druckbegrenzungsventil (17), das im Hauptventilkörper (22) eine von einem Steuerölstrom Q durchflossene Drossel (23) aufweist, dessen Lage durch den von einem einen Ventilsitz (32, 32a, 32c) und einen Ventilkörper (33, 33a, 33c) aufweisen den Vorsteuerventil (29, 29a, 29c) vorgegebenen Steuerdruck in einem Druckraum (25) des Druckbegrenzungsventils (17) steuerbar ist, und wobei hinter dem Ventilsitz (32, 32a, 32c) des Vorsteuerventils (29, 29a, 29c) in einer Rücklaufleitung (38) des Vorsteuerventils (29, 29a, 29c) eine Drossel (39, 39c) angeordnet ist, dadurch gekennzeichnet, daß von der Rücklaufleitung (38) zwischen der Drossel (39, 39a) und dem Ventilsitz (32, 32a, 32c) des Vorsteuerventils (29, 29a, 29c) eine Leitung (43, 43c) zu einem Druckraum (36a, 46) für den Ventilkörper (33, 33a, 33c) abzweigt und ein zweiter Druckraum (36) des Vorsteuerventils (29, 29a, 29c) über eine Leckölleitung (42) mit dem Tank (12) verbunden ist, so daß der vor der Drossel (39, 39c) herrschende Druck auf die dem Ventilsitz (32, 32a, 32c) abgewandte Stirnseite (34a) des Ventilkörpers (33, 33a, 33c) des Vorsteuerventils einwirkt.

2. Druckbegrenzungsventil nach Anspruch 1, dadurch gekennzeichnet, daß das Vorsteuerventil (29a) ein Magnetventil ist, dessen Anker (34) fest mit dem Ventilkörper (33a) verbunden ist und daß der Ventilkörper (33a) durch die Kraft einer Feder (37a) auf den Ventilsitz (32a) gedrückt wird (Figur 2).

3. Druckbegrenzungsventil nach Anspruch 1, dadurch gekennzeichnet, daß das Vorsteuerventil (29) ein Magnetventil ist, dessen Anker (34) fest mit dem Ventilkörper (33) verbunden ist und daß der Ventilkörper (33) durch die Kraft einer Feder (37) von seinem Ventilsitz (32) abgehoben wird. (Figur 1)

4. Druckbegrenzungsventil nach Anspruch 1, dadurch gekennzeichnet, daßderVentiikörper(33c) von einer Feder (37c) belastet ist, deren Federkraft einstellbar ist (Figur 3).

5. Druckbegrenzungsventil nach Anspruch 4, dadurch gekennzeichnet, daß die Federkraft der Feder (37c) mit Hilfe eines Kolbens (45), auf den der vor der Drossel (39c) herrschende Druck einwirkt, verstellbar ist, so daß der herrschende Druck mittelbar auf die Stirnseite des Ventilkörpers (33) einwirkt (Figur 3).

## Claims

1. Pilot-operated pressure control valve (17), which, in the main valve body (22), has a restrictor (23) through which the control oil flow Q flows, and whose position can be controlled by the control pressure in a pressure space (25) of the pressure control valve (17), which control pressure is predetermined by a pilot valve (29, 29a, 29c) which has a valve seat (32, 32a, 32c) and a valve body (33, 33a, 33c), and in which arrangement a restrictor (39, 39c) is arranged behind the valve seat (32, 32a, 32c) of the pilot valve (29, 29a, 29c) in a return line (38) of the pilot valve (29, 29a, 29c), characterized in that a line (43, 43c), branches off from the return line (38) between the restrictor (39, 39a) and the valve seat (32, 32a, 32c) of the pilot valve (29, 29a, 29c) to a pressure space (36a, 46) for the valve body (33, 33a, 33c) and a second pressure space (36) of the pilot valve (29, 29a, 29c), is connected to the tank (12) via a leakage oil line (42), so that the pressure prevailing in front of the restrictor (39, 39c) acts on the end face (34a) of the valve body (33, 33a, 33c) of the pilot valve which is remote from the valve seat (32, 32a, 32c).

2. Pressure control valve according to Claim 1, characterized in that the pilot valve (29a) is a solenoid valve whose armature (34) is firmly connected to the valve body (33a), and in that the valve body (33a) is thrust onto the valve seat (32a) by the force of a spring (37a) (Fig. 2).

3. Pressure control valve according to Claim 1, characterized in that the pilot valve (29) is a solenoid valve whose armature (34) is firmly connected to the valve body (33), and in that the valve body (33) is lifted from its valve seat (32) by the force of a spring (37) (Fig. 1).

4. Pressure control valve according to Claim 1, characterized in that the valve body (33c) is loaded by a spring (37c) whose spring force is adjustable (Fig. 3).

5. Pressure control valve according to Claim 4, characterized in that the spring force of the spring (37c) can be adjusted by means of a piston (45) on which the pressure prevailing in front of the restrictor (39c) acts, so that the prevailing pressure acts indirectly on the end face of the valve body (33) (Fig. 3).

## Revendications

1. Limiteur de pression servocommandé (17), qui comporte dans le corps de soupape principal (22) un étranglement (23) parcouru par un courant d'huile de commande Q et dont la position est susceptible d'être commandée par la pression de commande régnant dans une chambre de pression (25) du limiteur de pression (17), et prédéfi- nie par une soupape de servocommande (29, 29a, 29c) comportant un siège de soupape (32, 32a, 32c) et un corps de soupape (33, 33a, 33c), tandis qu'en aval du siège (32, 32a, 32c) de la soupape de servocommande (29, 29a, 29c) un étranglement (39, 39c) est disposé sur une canalisation de retour (38) de la soupape de servocommande (29, 29a, 29c), limiteur de pression caractérisé en ce que, de la canalisation de retour (38) entre l'étranglement (39, 39a) et le siège (32, 32a, 32c) de la soupape de servocommande (29, 29a, 29c), part une canalisation (43, 43c) vers une chambre de pression (36a, 46) pour le corps de soupape (33, 33a, 33c) et une seconde chambre de pression (36) de la soupape de servocommande (29, 29a, 29c) est reliée au réservoir (12) par une canalisation de fuites d'huile, de sorte que la pression régnant en amont de l'étranglement (39, 39c) agit sur la face frontale (34a), opposée au siège de soupape (32, 32a, 32c), du corps (33, 33a, 33c) de la soupape de servocommande.

2. Limiteur de pression selon la revendication 1, caractérisé en ce que la soupape de servocommande (29a) est une soupape magnétique, dont l'induit (34) est relié rigidement au corps de soupape (33a), et en ce que le corps de soupape (33a) est pressé par la force d'un ressort (37a) sur le siège de soupape (32a) ( figure 2).

3. Limiteur de pression selon la revendication 1, caractérisé en ce que la soupape de servocommande (29) est une soupape magnétique, dont l'induit (34) est relié rigidement au corps de soupape (33), et en ce que le corps de soupape (33) est soulevé de son siège (32) par la force d'un ressort (37) ( figure 1).

4. Limiteur de pression selon la revendication 1, caractérisé en ce que le corps de soupape (33c) est chargé par un ressort (37c), dont la force élastique est réglable ( figure 3).

5. Limiteur de pression selon la revendication 4, caractérisé en ce que la force élastique du ressort (37c) est susceptible d'être réglée à l'aide d'un piston (45), sur lequel agit la pression régnant en amont de l'étranglement (39c), de sorte que la pression régnant agit indirectement sur la face frontale du corps de soupape (33) ( figure 3).
